# EUROPÄISCHE PATENTSCHRIFT

(11) **EP 3 959 030 B1**
(45) Veröffentlichungstag und Bekanntmachung des Hinweises auf die Patenterteilung: **09.04.2025**
(21) Anmeldenummer: 20724010.2
(22) Anmeldetag: 24.04.2020
(51) Int. Cl.: B23K 11/02, B23K 20/02, B23K 20/12, B23K 28/02

(54) **VERFAHREN UND VORRICHTUNG ZUM REIBSTROMFÜGEN**
METHOD AND DEVICE FOR FRICTION CURRENT JOINING
PROCEDE ET DISPOSITIF DE CONNEXION DE COURANT DE FRICTION

(30) Priorität: 25.04.2019 DE 102019110664
(43) Veröffentlichungstag der Anmeldung: 02.03.2022
(73) Patentinhaber: KUKA Deutschland GmbH, 86165 Augsburg (DE)
(72) Erfinder: HERRICH, Jörg, 86415 Mering (DE); HABERSETZER, Stefan, 86316 Rinnenthal (DE); SCHNEIDER, Klaus, 86316 Friedberg (DE); BURGER, Andreas, 86154 Augsburg (DE); PHAM, Andy, 86163 Augsburg (DE)
(74) Vertreter: ERNICKE Patent- und Rechtsanwälte PartmbB
(86) Internationale Anmeldenummer: PCT/EP2020/061466
(87) Internationale Veröffentlichungsnummer: WO 2020/216903

(56) Entgegenhaltungen:
- DE-A1- 102015 226 827
- DE-U1- 202013 102 617
- DE-U1- 29 922 396
- KR-A- 20080 057 444
- US-A1- 2011 100 981

## Beschreibung

Die Erfindung betrifft ein Verfahren und eine Vorrichtung zum Reibstromfügen von zwei oder mehr Werkstücken.

Aus der Praxis ist es bekannt, zwei oder mehr Werkstücke durch Reibschweißen zu fügen, wobei die Werkstücke an ihren Fügeflächen miteinander in Kontakt gebracht und unter einem niedrigen Anpressdruck mit einer gegenseitigen Relativbewegung kurz angerieben werden. In einer nachfolgenden Reibphase mit deutlich erhöhtem Anpressdruck und andauernder Relativbewegung werden die Werkstücke an ihren kontaktierenden Fügeflächen durch die Reibungswärme plastifiziert sowie nachfolgend durch einen hohen Stauchdruck in einer Stauchphase zusammengepresst. In der Reibphase und der Stauchphase findet in der Fügezone zwischen den Fügeflächen der Werkstücke eine seitliche Verdrängung des plastifizierten Materials unter einer Wulstbildung statt, wobei außerdem eine Werkstückverkürzung eintritt. Das konventionelle Reibschweißverfahren kann zu Faserumlenkungen und Aufhärtungen in der Fügezone führen.

Die KR 20080057444 A betrifft das elektrische Widerstandsschweißen von platten- und zapfenförmigen Bauteilen bei Smartphones und Notebooks, um ein Display mit seiner Platine an einem Gehäuse zu befestigen. Dabei werden in einer vorgegebenen Schrittfolge die Bauteile an Elektroden montiert und dann durch Senkbewegung entlang einer Achse unter Druck in gegenseitigen Kontakt gebracht sowie auf das Anliegen von Druck kontrolliert. Danach wird elektrischer Strom aufgeschaltet und anschließend werden die kontaktierten Bauteile um die besagte Achse relativ zueinander gedreht und dabei reibgeschweißt. Das Schweißergebnis wird geprüft, wobei der Vorgang unter Druckerhöhung ggf. wiederholt wird, falls die Schweißqualität nicht ausreicht.

Die DE 299 22 396 U1 lehrt ein Reibschweißen mit Anreib- und Reibphase, das für reibzuschweißende kritische Werkstücke mit sehr unterschiedlichem Schmelzverhalten konzipiert ist. Die Werkstücke werden durch eine drehende Relativbewegung in der Reibphase plastifiziert, wobei der Stauchhub erst nach ausreichender Plastifizierung erfolgt. Mit einer zusätzlichen Heizeinrichtung wird zusätzlich zur Reibschmelzwärme weitere Heizenergie gezielt einseitig wirkend oder einseitig verstärkt wirkend auf eines der zu reibzuschweißenden Werkstücke eingebracht, um das unterschiedliche Schmelzverhalten auszugleichen und das schwerer schmelzende Werkstück zusätzlich zu beheizen. Die zusätzliche Heizeinrichtung ist bevorzugt eine Induktionsheizung, wobei Abwandlungen mit Heißluft, offener Flamme oder mit einer an einem Werkstück angelegten Widerstandheizung etc. möglich sind.

Aus der Praxis ist es ferner bekannt, beim Reibschweißen die zu schweißenden Werkstücke elektrisch induktiv vorzuwärmen oder auch das gefügte Schweißteil nach dem Fügeprozess elektrisch nachzuwärmen. Die DE 10 2016 217 024 A1 und die WO 2010/054627 A1 lehren ein induktives Erwärmen der Werkstücke während der Reibphase und der reibenden Relativbewegung der Werkstücke.

Die DE 693 13 131 T2 befasst sich mit dem Abriebschweißen von klemmend ineinander gesteckten und dabei in Steckrichtung relativ zueinander bewegten Werkstücken unter Bildung von Abrieb an den Kontaktstellen bzw. Klemmstellen und Verstärkung des Abriebs bei der Relativbewegung durch eine elektrische Heizung. Hierbei wird durch Verschweißen der abgeriebenen Partikel eine Abriebverbindung mit verstärkter Diffusionsbindung geschaffen.

Die DE 20 2013 102 617 U1 lehrt das Schweißen von Werkstücken mit einem magnetisch bewegten Lichtbogen, der in einem Spalt zwischen den zunächst distanzierten Werkstücken umläuft und die Werkstückränder erwärmt, wobei die Werkstücke anschließend axial gestaucht werden.

Es ist Aufgabe der vorliegenden Erfindung, eine verbesserte Fügetechnik aufzuzeigen. Die Erfindung löst diese Aufgabe mit den Merkmalen in den selbstständigen Verfahrens- und Vorrichtungsansprüchen.

Die beanspruchte Fügetechnik, d.h. das Verfahren und die Vorrichtung zum Reibstromfügen, haben verschiedene Vorteile.

Die Werkstücke werden anspruchsgemäß in einem mehrstufigen Prozess reibstromgefügt, der sich in eine Annäherungsphase, eine folgende Anreibphase und eine direkt anschließende Stauchphase mit elektrischer konduktiver Erwärmung gliedert.

Die beim üblichen Reibschweißen vorhandene zusätzliche Reibphase mit reibender Relativbewegung unter hohem Anpressdruck und tiefgreifender Plastifizierung der Werkstücke durch die entstehende Reibwärme entfällt. Bei der Erfindung werden die Werkstücke stattdessen durch die konduktive elektrische Erwärmung beheizt und plastifiziert. Dadurch entfallen bei der Erfindung auch die hohen Momentenspitzen beim Stoppen der reibenden Relativbewegung, welche eine konventionelle Reibschweißmaschine mechanisch stark belasten.

Der Prozess kann mit einer vorgeschalteten Kalibrierung beginnen, in der die Werkstücke unter Positionserfassung und Nullpunkt-Kalibrierung in Berührung gebracht und dann wieder mit Wegmessung distanziert werden, wobei anschließend die Annäherungsphase startet. Im Reibstromfügeprozess findet bevorzugt eine Wegsteuerung oder Wegregelung zur Einstellung der gewünschten Länge des gefügten Fertigteils statt.

Die zu fügenden Werkstücke werden in der Annäherungsphase an ihren einander zugewandten Fügeflächen gegenseitig angenähert und in Kontakt gebracht. Dies kann entlang einer gemeinsamen Prozessachse oder Maschinenachse geschehen. Die Fügeflächen sind quer, insbesondere senkrecht, zur Prozessachse ausgerichtet. Diese Achse ist bevorzugt liegend angeordnet und hat eine überwiegend horizontale Richtungskomponente.

In der Anreibphase werden die kontaktierenden Fügeflächen unter Anpressdruck durch gegenseitige Relativbewegung nur angerieben und egalisiert. Die gegenseitige Relativbewegung erfolgt quer zu der Prozessachse. Hierbei können die Fügeflächen eingeebnet, gegenseitig adaptiert und vollflächig in Anlage gebracht werden. Das hat Vorteile für einen besseren Stromfluss. Die in der Anreibphase eingebrachte Reibungsenergie und Wärme dient nur zum Egalisieren der kontaktierenden Fügeflächen. Sie reicht nicht zum Plastifizieren und Schmelzen der jeweils angrenzenden Werkstückbereiche aus.

Der Anpressdruck kann entlang der besagten Prozessachse einwirken. Die reibende Relativbewegung ist bevorzugt eine rotatorische Bewegung um die Prozessachse, die kontinuierlich oder oszillierend erfolgen kann. Die Anreibphase beginnt mit der Kontaktierung der Fügeflächen. Die Relativbewegung der Werkstücke kann vor der Kontaktierung bei noch distanzierten Werkstücken starten.

In der Anreibphase können Formfehler, Schrägschnitt, Verschmutzungen, Verölungen und dgl. an den Fügeflächen beseitigt werden.

Die Werkstücke können jeweils mehrere Fügeflächen haben. Durch das Anreiben können alle kontaktierenden Fügeflächen gegenseitig angeglichen werden und können für das anschließende Fügen plan und vollflächig aneinander liegen. Die ist günstig für die gleichmäßige Erwärmung aller Fügeflächen beim Reibstromfügen mit elektrischer konduktiver Erwärmung.

Am Ende der Anreibphase werden die Werkstücke bzw. die kontaktierenden Fügeflächen still gesetzt. Die Beendigung der reibenden Relativbewegung ist bevorzugt dauerhaft, d.h. die reibende Relativbewegung wird in der direkt anschließenden Stauchphase nicht wieder aufgenommen.

In der Stauchphase werden die Werkstücke bzw. die kontaktierenden Fügeflächen unter einem Anpressdruck und unter konduktiver Erwärmung mit elektrischem Strom zusammengepresst, plastifiziert und gefügt. Der Anpressdruck wirkt entlang der Prozessachse. Der elektrische Strom ist bevorzugt ein geregelter Konstantstrom. Günstig ist der Einsatz von Gleichstrom. Die Stromdichte kann vorteilhaft z.B. 30 - 50 A/mm² betragen.

Die Werkstücke weisen ein stromleitendes Material auf. Besonders geeignet und bevorzugt für das Reibstromfügen sind eisenhaltige Metalle, insbesondere Stähle oder eisenhaltige Gusswerkstoffe. Eine vorteilhafte Eignung besteht auch für metallische Titan-Werkstoffe oder Nickel-Basislegierungen.

In der Stauchphase kann der axiale Anpressdruck gleich groß wie in der Anreibphase sein oder bevorzugt geringfügig erhöht werden. Die konduktive elektrische Erwärmung ist sofort bei Beginn der Stauchphase vorhanden und dauert über die Stauchphase an.

Die elektrische Spannung bzw. der Strom wird in einer vorteilhaften Ausführung erst nach Beendigung der reibenden Relativbewegung, insbesondere bei still stehenden kontaktierenden sowie unter Anpressdruck stehenden Werkstücken aufgeschaltet. Das Plastifizieren und Fügen der Werkstücke unter Anpressdruck findet vornehmlich durch die konduktive Erwärmung in der Stauchphase statt. Die zum Fügen erforderliche Wärme wird im Wesentlichen durch die elektrische konduktive Erwärmung eingebracht. Während der Stauchphase ist es günstig, wenn die Werkstücke keine gegenseitige reibende Relativbewegung ausführen.

Die beanspruchte Reibstromfügetechnik bietet eine hohe Reproduzierbarkeit und Qualität der Fügetechnik und der hergestellten Fügeteile. Es kann immer die gleiche Energiemenge umgewandelt und für den Fügeprozess benutzt werden. Der gleichmäßige Stromfluss durch die beteiligten Fügeflächen und die gleichmäßige Erwärmung dieser Fügeflächenbereiche sorgen für eine hohe und gleichmäßige Fügequalität. Die kontaktierten Fügeflächen und die angrenzenden Werkstückbereiche werden durch die Stromwärme plastifiziert. Die beim Reibschweißen üblichen Schwankungen der Erwärmung durch Korrosion, Rauheit, Schmierfilm etc. auf den Fügeflächen können vermieden werden.

Mit der bekannten induktiven Erwärmung der Werkstücke lassen sich nicht die gleichen Qualitäten wie beim erfindungsgemäßen Reibstromfügen mit konduktiver elektrischer Erwärmung erreichen. Die induktive Erwärmung ist auch ineffizienter.

Die beanspruchte Reibstromfügetechnik kommt gegenüber anderen Fügetechniken mit geringeren Werkstückverkürzungen aus und ermöglicht eine bessere und genauere Einhaltung der Dimensionsvorgaben für das Fügeteil bzw. Schweißteil. Beim Reibstromfügen kann leichter und genauer eine Längenregelung für das Fügeteil bzw. Schweißteil erfolgen.

Außerdem sind geringere Kräfte und Momente zum Positionieren, insbesondere Drehpositionieren, der Werkstücke beim Fügen erforderlich. Die Positionierung kann beim Anreiben leicht sowie genau eingestellt werden und muss beim anschließenden Fügen mit Stauchen und konduktiver Erwärmung nicht mehr geändert werden. Etwaige Positionsvorgaben, z.B. eine Drehposition der Werkstücke am fertigen Füge- oder Schweißteil, können exakt eingehalten werden. Eine Wulstbildung an der Fügezone der Werkstücke kann vermieden oder zumindest gegenüber dem Reibschweißen wesentlich gemindert werden.

Beim Reibstromfügen können dank der konduktiven elektrischen Erwärmung der Werkstücke die Temperaturen in der Fügezone und in den anderen Werkstückbereichen besser kontrolliert und gesteuert sowie ggf. geregelt werden. In Verbindung mit der Temperaturerfassung kann der Reibstromfügeprozess bei Metallen unter Nutzung ihres temperaturabhängigen Umwandlungs- und Phasenverhaltens sowie der zugehörigen ZTU-Diagramme optimiert werden. Gewünschte Gefügeausbildungen können gezielt, sicher und reproduzierbar erreicht werden.

Die Temperatur kann direkt oder mittelbar, z.B. über den elektrischen Widerstand R erfasst werden, z.B. zu Zwecken der Prozessüberwachung. Der elektrische Widerstand R kann auch zum Steuern oder Regeln des Anreibprozesses benutzt werden, z.B. i.V.m. einer geringen Stromdichte. Es ergeben sich Vorteile für die Taktzeiteinsparung, Reproduzierbarkeit und Prozessicherheit und Qualitätssicherung.

Die beanspruchte Reibstromfügetechnik kommt mit kürzeren Prozesszeiten und einem günstigeren Energieeinsatz als beim Stand der Technik aus. Durch die konduktive Erwärmung der zu fügenden Werkstücke mit elektrischem Strom kann eine gleichmäßige, schnelle und exakt steuerbare Aufheizung der Werkstücke erfolgen. Die Erwärmung bzw. Aufheizung findet im Gegensatz zum konventionellen Reibschweißen nicht nur in einem eng begrenzten Bereich an der Fügezone, sondern auch in den angrenzenden weiteren und vom Strom durchflossenen Werkstückbereichen statt. Die Erwärmungszone ist beim Reibstromfügen wesentlich verbreitert. Die Erwärmung kann über den Querschnitt der Fügeflächen der Werkstücke gleichmäßig erfolgen. Hierdurch können die beim konventionellen Reibschweißen üblichen Aufhärtungen des Fügeteils in der Fügezone vermieden oder wenigstens gemindert werden.

Dank der gleichmäßigen konduktiven elektrischen Erwärmung der zu fügenden Werkstücke genügt für den Reibstromfügeprozess ein Anpressdruck in der Stauchphase, der wesentlich geringer als beim konventionellen Reibschweißen ist. Er kann bei 125 MPa, insbesondere 100 MPa, oder weniger liegen im Vergleich zu den beim konventionellen Reibschweißen üblichen bis zu 250 MPa, bezogen z.B. auf Werkstückpaarung Stahl/Stahl. Beim beanspruchten Reibstromfügen kann der axiale Anpressdruck in der Anreibphase und ggf. Stauchphase bei z.B. 20 - 40 MPa liegen. Der Anpressdruck berechnet sich als Anpresskraft pro Flächengröße der kontaktierenden Fügeflächen der Werkstücke.

Der geringere Anpress- und Stauchdruck vermeidet oder mindert Faserumlenkungen im Werkstückmaterial an der Fügezone. Hierfür ist auch eine kurze Anreibzeit bei gemindertem Anpressdruck günstig. Ferner ist eine homogene Gefügeausbildung erreichbar. Es ergeben sich Vorteile für die Verbesserung und Erhöhung der Festigkeit, insbesondere Dauerfestigkeit, im Bereich der Fügezone und für den Korrosionsschutz. Das homogene Gefüge ist weniger korrosionsanfällig. Ferner können eingerollte Wulste und deren Korrosionsprobleme vermieden werden.

Beim beanspruchten Reibstromfügen entfällt die beim konventionellen Reibschweißen vorhandene Reibphase mit Relativbewegung der Werkstücke unter hohem Anpressdruck und Reiberwärmung der Werkstücke. Die beanspruchte Reibstromfügetechnik kommt mit wesentlich geringeren Kräften oder Momenten und mit einem deutlich niedrigeren Energiebedarf aus. Schwungmassen zum Trägheitsreibschweißen sind entbehrlich. Dies ermöglicht einerseits eine Dimensionsverringerung der Reibstromfügevorrichtung gegenüber konventionellen Reibschweißmaschinen oder bei gleich bleibender Dimensionierung das Fügen von deutlich größeren Werkstücken und größeren Fügeflächen.

Bei der beanspruchten Reibstromfügetechnik dient die Anreibphase mit dem geringen Anpressdruck zu einer Egalisierung der kontaktierenden Fügeflächen. Dabei werden Unebenheiten beseitigt und die effektiven Kontaktbereiche an den Kontaktflächen vergrößert und vergleichmäßigt. Dies ist günstig für einen vollflächigen und gleichmäßigen Stromfluss an den kontaktierenden Fügeflächen und für eine entsprechend gleichmäßige Erwärmung der Werkstücke. Für das Anreiben genügen der besagte niedrige Anpressdruck und auch eine sehr kurze Anreibzeit. Diese kann z.B. eine Sekunde oder weniger betragen. Je nach Werkstück- und Materialpaarung kann sie auch etwas höher liegen.

In der Anreibphase ist es günstig, die Werkstücke nicht mit elektrischem Strom zu beaufschlagen. Alternativ ist eine nur kurzfristig und pulsweise Beaufschlagung mit elektrischem Strom und geringer Stromdichte möglich. Durch Stromkonzentration an den Spitzen von Unebenheiten der Fügeflächen kann der Abtrag dieser Unebenheiten erleichtert werden. Die eingebrachte Wärmeenergie ist in den genannten Fällen sehr niedrig. Dies ist vorteilhaft, um die zum Anreiben und zur Relativbewegung der Werkstücke erforderliche Antriebsenergie niedrig zu halten. Unebenheiten an den Fügeflächen können leichter und schneller eingeebnet werden, wobei sich reibungserhöhende Hafterscheinungen an den kontaktierenden Fügeflächen vermeiden oder zumindest deutlich reduzieren lassen.

Die Plastifizierung der Werkstücke an der Fügezone und die Bildung der Fügeverbindung finden bei der beanspruchten Reibstromfügetechnik im Wesentlichen oder nur in der Stauchphase und unter Einwirkung des elektrischen Stroms und der konduktiven Erwärmung statt. Die Plastifizierung und die konduktive Erwärmung sind dank der besagten Egalisierung in der Anreibphase gleichmäßig und können über die gesamte Fügeflächengröße erfolgen. Die Erwärmung entsteht nicht nur lokal an der Fügezone, sondern reicht über eine große axiale Länge der angrenzenden Werkstückbereiche.

Die reibende Relativbewegung der Werkstücke an ihren kontaktierenden Fügeflächen wird nach der Anreibphase beendet. Die beim normalen Reibschweißen übliche längere Reibphase entfällt dadurch. Die nachfolgende Stauchphase kann am Ende oder nach der Beendigung der reibenden Relativbewegung stattfinden. Vorzugsweise wird auch im weiteren Verlauf der Stauchphase von einer reibenden Relativbewegung der Werkstücke abgesehen.

Die Strombeaufschlagung der Werkstücke und deren konduktive Erwärmung findet vor allem während der Stauchphase statt. Das Anlegen der elektrischen Spannung bzw. der Stromfluss können am Ende oder nach der Beendigung der Anreibphase bzw. der reibenden Relativbewegung erfolgen. Der elektrische Strom kann am Ende der Stauchphase abgeschaltet werden, wobei zugleich der Anpressdruck aufgehoben wird. Die Stromabschaltung kann auch vor Beendigung der Stauchphase und des Anpressdrucks erfolgen.

Die Werkstücke können kontinuierlich drehend und/oder oszillierend an ihren kontaktierenden Fügeflächen relativ zueinander in der Anreibphase bewegt werden. Eine Drehbewegung ist zur Egalisierung und exakten sowie definierbaren Anpassung der Fügeflächen besonders günstig. Eine oszillierende Relativbewegung kann alternativ oder zusätzlich translatorisch sein. Ferner ist es günstig, wenn die Annäherungsbewegung und die Anpressung sowie die Stauchkraft entlang einer Stauchachse bzw. Maschinenachse einer Reibstromfügevorrichtung erfolgen. Die Prozessachse kann die Stauchachse sein.

Die Stromquelle und die Stromzuführung an die zu fügenden Werkstücke oder an die mit den zu fügenden Werkstücken verbundenen Vorrichtungsteile, insbesondere die Werkstückaufnahmen, können in beliebig geeigneter Weise ausgebildet sein. Die Stromaufschaltung zur konduktiven elektrischen Erwärmung der Werkstücke in der Stauchphase kann in der Ruhestellung der Werkstücke bzw. der Werkstückaufnahmen stattfinden. Sie kann auch in der Anreibphase bei z.B. niedriger Geschwindigkeit erfolgen.

Für die bevorzugt drehende Werkstückaufnahme sind im Stillstand zustellbare Elektroden, z.B. in Backenform, oder permanente elektrische Schleifkontakte, z.B. Bürsten vorteilhaft. Die andere Werkstückaufnahme kann dauerhaft mit der Stromzuführung elektrisch leitend verbunden sein. Die Stromzuführung kann zur Kompensation des axialen Werkstückvorschubs mit einer elastischen Leitung ausgestattet oder auf andere Weise nachführbar ausgebildet sein.

Günstig ist eine programmierbare sowie steuer- und regelbare Stromquelle. Eine Stromquelle für Gleichstrom mit einer Konstantstrom-Regelung zur exakten Einhaltung der programmgesteuerten elektrischen Prozessströme ist von besonderem Vorteil.

Zudem ist es günstig, wenn für die Stromquelle und die stromführenden Teile Komponenten der Mittelfrequenztechnik eingesetzt werden. Eine solche Mittelfrequenztechnik mit z.B. 1.000 Hz ist standardisiert und kostengünstig. Es ergeben sich auch Vorteile hinsichtlich Arbeitsschutz und elektromagnetischer Verträglichkeit, sogenannter EMV.

Die Spannungen an den stromführenden Stellen, insbesondere an den Elektroden, können niedrig sein. Sie können im Bereich von z.B. 5 - 30 V Gleichstrom liegen. Dies ist aus Unfallschutz- und Sicherheitsgründen von Vorteil.

Für etwaig auftretende Magnetisierungen an der Reibstromfügevorrichtung und ggf. den Werkstücken kann eine Entmagnetisierungseinrichtung vorhanden sein. Diese kann in unterschiedlicher Weise ausgebildet sein und wirken. Sie kann z.B. beim konduktiven Erwärmen mit Gleichstrom einen ggf. gepulsten Entmagnetisierungsstrom mit entgegengesetzter Polung erzeugen. Der Entmagnetisierungsstrom hat eine geringere Stromstärke als der Heizstrom, die ausreicht, um die Koerzitivfeldstärke des aufmagnetisierten Materials zu erreichen. Das Entmagnetisieren mit z.B. einem oder wenigen Strompulsen kann während der Stauchphase stattfinden.

In Ergänzung der beanspruchten Reibstromfügetechnik ist es bedarfsweise möglich, die Werkstücke nach dem Fügen elektrisch nachzuwärmen. Dies kann ebenfalls durch konduktive Erwärmung, alternativ oder zusätzlich auch durch induktive Erwärmung erfolgen. Ein elektrisches Vorwärmen vor dem Fügen ist ebenfalls möglich, aber weniger erwünscht.

Besondere Vorteile der beanspruchten Reibstromfügetechnik betreffen die Homogenität und den gleichmäßigen Stromfluss sowie die gleichmäßige Erwärmung der beaufschlagten Fügeflächen bei der konduktiven Erwärmung. Die über die Fläche bzw. den Durchmesser gleichmäßige Erwärmung führt zu einer entsprechenden Vergleichmäßigung der Festigkeit und der Härte. Weitere Vorteile betreffen Werkstücke mit mehreren Fügeflächen, die besonders vorteilhaft reibstromgefügt werden können. Beim rotatorischen Reibschweißen ist die Erwärmung bewegungsbedingt ungleichmäßig. Sie ist am äußeren Werkstückrand größer als im inneren Bereich.

Zudem lassen sich Werkstücke aus gleichen oder unterschiedlichen stromleitenden Materialien in vorteilhafter Weise reibstromfügen. Dies können z.B. unterschiedliche Metalle oder auch andere gleiche oder unterschiedliche Werkstoffkombinationen sein, z.B. Stahl mit einem eisenhaltigen Gusswerkstoff. Durch die konduktive Erwärmung lässt sich im Vergleich mit der konventionellen Reibschweißtechnik viel Prozesszeit und auch Werkstückmaterial einsparen. Außerdem können die Gefügeeigenschaften deutlich verbessert werden. Spezielle Vorteile ergeben sich beim Reibstromfügen von Werkstücken mit unterschiedlichen Dicken an den Fügeflächen und insbesondere bei relativ dünnwandigen Rohren.

Ein weiterer Vorteil der beanspruchten Reibstromfügetechnik liegt in der Minderung des axialen Wärmeabflusses von der Fügezone. Beim konventionellen Reibschweißen sind der axiale Temperaturgradient und der Wärmeabfluss hoch. Dank der gleichmäßigen konduktiven Erwärmung kann dies beim Reibstromfügen deutlich verringert werden. Die mit einem starken Temperaturgradienten einhergehenden ungünstigen Gefügeänderungen von insbesondere metallischen Werkstücken können beim Reibstromfügen vermieden oder zumindest deutlich gemindert werden.

Beim Reibstromfügen wird durch die gleichmäßige konduktive elektrische Erwärmung genügend Wärme in die Werkstücke und das gebildete Fügeteil eingebracht, was für den stabilen und beherrschbaren, sowie ggf. an spezielle Werkstofferfordernisse, insbesondere Gefügevorgaben, anpassbaren Fügeprozess von Vorteil ist. Außerdem lässt sich ein etwaiger Wulst an der Fügezone leichter und qualitativ besser entfernen.

Mit der beanspruchten Reibstromfügetechnik können auch schwierige Werkstückmaterialien, insbesondere chromhaltige und/oder manganhaltige Stähle oder dgl., sicher und zuverlässig gefügt werden, selbst wenn diese normalerweise nicht oder nur sehr schwer schweißbar sind. Dies gilt insbesondere für chromhaltige Stähle, wie z.B. 102 Cr 6 und ähnliche. Andere kritische Werkstoffe, z.B. spröde, insbesondere kaltspröde, Sintermaterialien, aber auch Gussmaterialien sowie vom thermischen Verhalten her ungleiche und problematische Materialkombinationen können ebenfalls gut und qualitativ hochwertig reibstromgefügt werden. Leichtmetalle untereinander lassen sich ebenfalls reibstromfügen.

Ein weiterer besonderer Vorteil besteht in der bereits erwähnten Vermeidung oder Minderung von Aufhärtungen im Materialgefüge an der Fügezone. Mit dem beanspruchten Reibstromfügen lassen sich zähelastische und duktile Füge- und Verbindungsbereiche am Fügeteil erreichen. Selbst kritische Werkstoffe, z.B. chromhaltige Stähle, zeigen biegeelastische Eigenschaften am Fügebereich im Gegensatz zu den beim konventionellen Reibschweißen üblichen Versprödungen und Duktilitätseinbußen. Durch die Vergleichmäßigung der Materialgefüge am Fügebereich beim Reibstromfügen werden außerdem innere Kerbspannungen und daraus resultierende Korrosionsempfindlichkeiten vermieden oder zumindest signifikant gemindert.

In den Unteransprüchen sind weitere vorteilhafte Ausgestaltungen der Erfindung angegeben.

Die Erfindung ist in den Zeichnungen beispielhaft und schematisch dargestellt. Im Einzelnen zeigen:
- Figur 1:: eine Reibstromfügevorrichtung in einer schematischen Seitenansicht,
- Figur 2 bis 5:: einen Ablauf des Fügeprozesses an zwei Werkstücken in mehreren Schritten,
- Figur 6:: ein schematisches Diagramm mit Verläufen von Anpressdruck, relativer Bewegungsgeschwindigkeit und elektrischem Strom über der Zeit,
- Figur 7 bis 10:: eine Stromzuführung und deren Teile in verschiedenen Ansichten und
- Figur 11 und 12:: eine Entmagnetisierungseinrichtung in zwei Varianten.

Die Erfindung betrifft ein Verfahren und eine Vorrichtung (1) zum Reibstromfügen von zwei oder mehr Werkstücken (2,3). Die Erfindung betrifft außerdem ein mit dem beanspruchten Verfahren aus den Werkstücken (2,3) hergestelltes Fügeteil (6).

Die Werkstücke (2,3) können aus gleichen oder unterschiedlichen stromleitenden Werkstoffen bestehen. Sie können insbesondere aus gleichen oder unterschiedlichen Metallen gebildet sein. Dies können z.B. eisenhaltige Stähle oder Gussmaterialien, Titan- oder Nickelbasis-Legierungen, oder dgl. sein. Insbesondere können ein oder mehrere Werkstücke (2,3) aus schweißkritischen chromhaltigen und ggf. manganhaltigen Stählen, z.B. 102 Cr 6, bestehen.

Die Werkstücke (2,3) können eine unterschiedlich gestaltbare Form und insbesondere Querschnittsgestaltung haben. Sie können als Hohlkörper, insbesondere als Rohre, oder aus Vollmaterial ausgebildet sein. Die Werkstücke (2,3) haben einander zugewandte Fügeflächen (4,5), insbesondere Stirnseiten, an denen die Fügeverbindung hergestellt wird. An jedem Werkstücke (2,3) können eine oder mehrere Fügeflächen (4,5) angeordnet sein. Günstig sind längliche Werkstückformen.

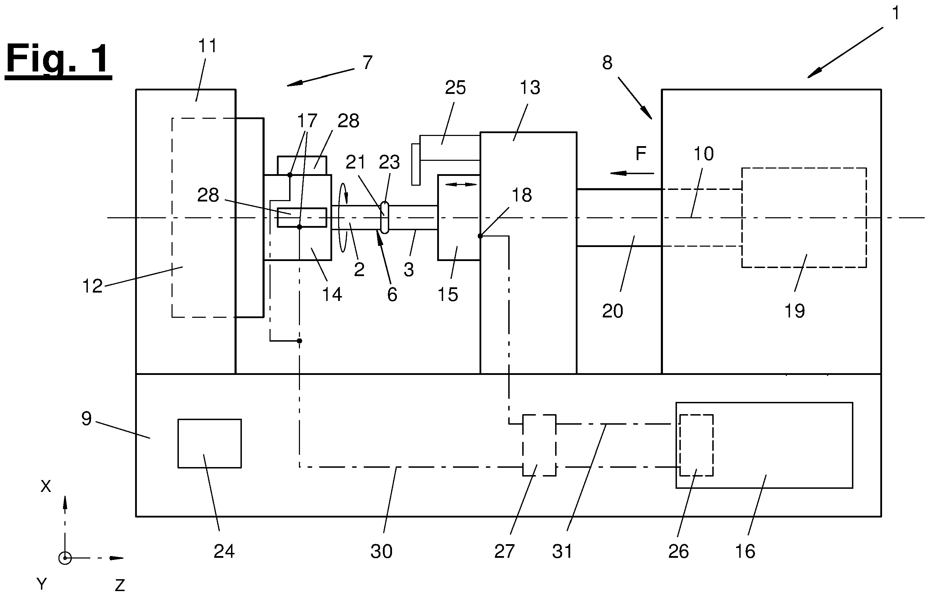

Im gezeigten Ausführungsbeispiel werden zwei Werkstücke (2,3) miteinander reibstromgefügt. Die hierfür eingesetzte Reibstromfügevorrichtung (1) kann z.B. als sogenannte Einkopfmaschine ausgebildet sein. Alternativ ist es möglich, drei oder mehr Werkstücke (2,3) in einer Aufspannung gleichzeitig oder nacheinander zu fügen. Hierfür kann z.B. eine sogenannte Doppelkopfmaschine oder auch doppelte Einkopfmaschine eingesetzt werden. In Figur 1 sind die Werkstücke (2,3) im bereits gefügten Zustand als Fügeteil (6) dargestellt.

Die in Figur 1 gezeigte Reibstromfügevorrichtung (1) weist eine Reibeinrichtung (7) und eine Staucheinrichtung (8) sowie einen Maschinengestell (9) und eine elektrische Stromquelle (16) auf. Das Maschinengestell (9) ist z.B. als Maschinenbett ausgebildet, auf dem die Reibeinrichtung (7) und die Staucheinrichtung (8) angeordnet sind. Die elektrische Stromquelle (16) kann im oder am Maschinengestell (9), insbesondere Maschinenbett, untergebracht sein.

Mit der Reibeinrichtung (7) können die zu fügenden Werkstücke (2,3) in der nachfolgend erläuterten Weise unter Anpressdruck und im Reibkontakt relativ zueinander bewegt werden. Mit der Staucheinrichtung (8) kann eine gegenseitige Zustellung und Kontaktierung der Werkstücke (2,3) erfolgen. Außerdem kann der zum Reibstromfügen eingesetzte Anpressdruck der kontaktierenden Werkstücke (2,3) aufgebracht werden. Die besagte Zustellung und die Aufbringung der Anpresskraft bzw. des Anpressdrucks können längs einer bevorzugt liegenden, insbesondere horizontalen, Achse (10) erfolgen. Dies kann eine sogenannte Maschinenachse oder Prozessachse oder auch Fügeachse bzw. Stauchachse sein. Die Fügeflächen (4,5) sind im gezeigten Ausführungsbeispiel senkrecht zur Achse (10) ausgerichtet.

Die Reibstromfügevorrichtung (1) weist Werkstückaufnahmen (14,15) für die Aufnahme von jeweils einen oder mehreren zu fügenden Werkstücken (2,3) auf. Die Werkstückaufnahmen (14,15) sind z.B. als manuell oder maschinell bediente bzw. betriebene Spannfutter ausgebildet. Dies können insbesondere sog. Zentrumspanner sein.

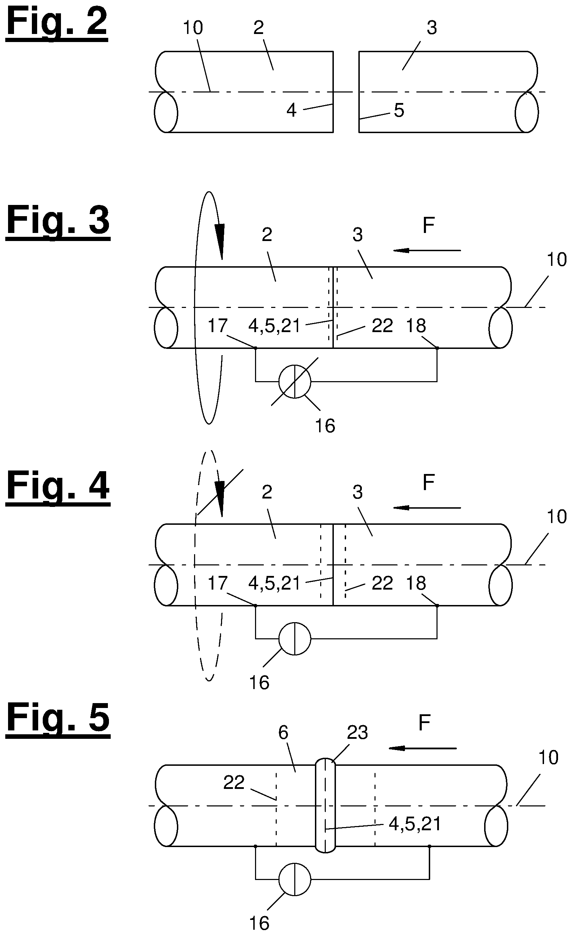

Die Staucheinrichtung (8) bringt die zu fügenden Werkstücke (2,3) aus einer gemäß Figur 2 anfänglich distanzierten Ladeposition an ihren Fügeflächen (4,5) in gegenseitigen Kontakt und erzeugt eine steuerbare und bevorzugt regelbare Anpresskraft (F). Diese wirkt z.B. in Richtung der Achse (10). Die Höhe der Anpresskraft (F) kann sich nach der Flächengröße der Fügeflächen (4,5) und dem dort wirkenden Anpressdruck richten. Der Anpressdruck liegt im Ausführungsbeispiel bei ca. 25 MPa.

Von der Reibeinrichtung (7) werden die in Kontakt befindlichen Werkstücke (2,3) relativ zueinander bewegt, insbesondere gedreht.

Bei der Relativbewegung werden eines oder mehrere der zu fügenden Werkstücke (2,3) bewegt. Im gezeigten Ausführungsbeispiel wird das linke Werkstück (2) relativ zum rechten Werkstück (3) bewegt. Die eine Werkstückaufnahme (14) für das Werkstück (2) ist beweglich und die andere Werkstückaufnahme (15) für das Werkstück (3) ist stationär. Die Relativbewegung ist eine drehende Bewegung um die bevorzugt zentrale Achse (10). Dies ist z.B. auch die zentrale Längsachse der Werkstücke (2,3). Die Drehbewegung kann umlaufend oder reversierend bzw. oszillierend sein. Diese Relativbewegung kann vor oder bei der Kontaktierung beginnen. Die Relativbewegung kann auch quer zur Achse (10) erfolgen. Die besagte Querausrichtung schließt rechtwinklige und schräge Ausrichtungen ein.

Die Reibeinrichtung (7) weist einen Maschinenkopf (11) mit einem Antrieb (12) für die zugeordnete Werkstückaufnahme (14) auf. Dies kann bei der rotierenden Relativbewegung ein Spindelantrieb sein, mit dem eine an die Werkstückaufnahme drehfest gekoppelte Spindel um die Achse (10) rotierend angetrieben wird. Der Maschinenkopf (11) kann starr oder beweglich am Maschinengestell (9) angeordnet sein. Er kann insbesondere längs der Achse (10) verschieblich oder verfahrbar und bedarfsweise arretierbar am Maschinengestell (9) gelagert sein.

Die andere Werkstückaufnahme (15) ist an einem Gegenhalter (13) angeordnet, der ebenfalls starr oder beweglich, insbesondere längs der Achse (10) verfahrbar und bedarfsweise arretierbar am Maschinengestell (9) angeordnet sein kann. Der Gegenhalter (13) kann z.B. als Schlitten mit Klemm- oder Absteckeinrichtung ausgebildet sein.

Im gezeigten Ausführungsbeispiel wird der Gegenhalter (13) von der Staucheinrichtung (8) an den Maschinenkopf (11) und an das dort gehaltene Werkstück (2) zugestellt. Dies ist eine durch Pfeile symbolisierte lineare Zustellbewegung. Die Staucheinrichtung (8) weist zu diesem Zweck einen Stauchantrieb (19) auf. Dies kann z.B. in der dargestellten Ausführungsform ein fluidischer, vorzugsweise hydraulischer, Zylinder oder ein motorischer Antrieb mit Elektromotor oder Hydraulikmotor sein. Der Stauchantrieb entwickelt in der gezeigten Ausführung Druckkräfte (F) und schiebt mit einem Abtriebselement (20), z.B. einer Kolbenstange, die Werkstückaufnahme (15) sowie den Gegenhalter (13) zum Maschinenkopf (11) hin. Der Stauchantrieb (19) ist zu diesem Zweck zumindest bei der Vorschubfunktion stationär am Maschinengestell (9) angeordnet und abgestützt. Die Stauchkraft und der Stauchdruck sowie die Zustellung wirken entlang der Achse (10).

In einer anderen und nicht dargestellten Ausführungsform kann ein Stauchantrieb am Maschinenkopf (12) angeordnet sein. Er kann z.B. Zugkräfte entwickeln und kann den Gegenhalter (13) entlang der Achse (10) zum Maschinenkopf (11) hinziehen.

Die Stromquelle (16) ist mit den Werkstücken (2,3) über Stromanschlüsse (17,18) elektrisch leitend verbunden. Die Stromanschlüsse (17,18) können in beliebig geeigneter Weise ausgebildet sein. Die Stromanschlüsse (17,18) können mit den Werkstücken (2,3) direkt oder mittelbar, z.B. über die Werkstückaufnahmen (14,15), elektrisch leitend verbunden sein oder werden.

Der eine Stromanschluss (18) ist an der z.B. stromleitenden, insbesondere metallischen, Werkstückaufnahme (15) des Gegenhalters (13) angeordnet. Diese ist z.B. drehfest angeordnet und wird vom Stauchantrieb (19) axial bewegt. Der andere Stromanschluss (17) ist an der z.B. bewegten und ebenfalls stromleitenden, insbesondere metallischen, Werkstückaufnahme (14) des Maschinenkopfs (11) angeordnet.

Die Stromanschlüsse (17,18) können jeweils eine oder mehrere Elektrode(n) (28,28',29,29') aufweisen. Diese können unterschiedlich ausgebildet sein. Der Stromanschluss (17) an der bewegten Werkstückaufnahme (14) kann z.B. mehrere Elektroden (28) in Form von Schleifringübertragern oder dgl. aufweisen, die am Umfang der um die Achse (10) rotierenden und zumindest bereichsweise kreisrunden Werkstückaufnahme (14) angeordnet sind. Die Elektroden (28) oder Schleifringübertrager sind mit der Stromquelle (16) über eine oder mehrere Leitungen (30) und mit der Werkstückaufnahme (14) über Schleifringe, Bürsten oder dgl. elektrisch leitend verbunden.

Der Stromanschluss (18) an der Werkstückaufnahme (15) des Gegenhalters (13) kann mit den ggf. beweglichen Spannelementen der Werkstückaufnahme (15) elektrisch leitend verbunden sein. Die Spannelemente können z.B. die Elektrode(n) (29) bilden. Der Stromanschluss (18) ist über eine oder mehrere Leitungen (32) mit der Stromquelle (16) verbunden.

Die elektrische Stromquelle (16) kann in beliebig geeigneter Weise ausgebildet sein. Sie weist eine programmierbare Steuerung (24) auf. Die Stromquelle (16) kann eingangseitig an eine Stromversorgung, insbesondere an ein lokales Wechselstromnetz, angeschlossen werden. Sie gibt ausgangseitig an die Werkstücke (2,3) einen Strom, vorzugsweise Gleichstrom, über die Stromanschlüsse (17,18) ab. Die kontaktierenden Werkstücke (2,3) werden vom elektrischen Strom in Richtung der Achse (10) durchflossen und konduktiv erwärmt.

Die Stromquelle (16) ist als programmierbare und steuerbare sowie vorzugsweise regelbare Stromquelle, insbesondere Gleichstromquelle, ausgebildet. Sie weist eine Konstantstromregelung auf, mit der die gesteuert abgegebenen Ströme konstant gehalten werden können. Die Stromquelle (16) kann über ein oder mehrere Stromprogramme gesteuert werden. Sie arbeitet mit niedrigen Spannungen von z.B. ca. 10 V. Die Stromquelle (16) arbeitet z.B. mit Mittelfrequenztechnik von beispielsweise 1.000 Hz. Der abgegebene Strom kann 100 kA oder mehr betragen. Die Stromabgabe richtet sich nach der Flächengröße der Fügeflächen (4,5). Die Stromdichte kann z.B. bei 25 bis 35 A/mm² oder weniger liegen.

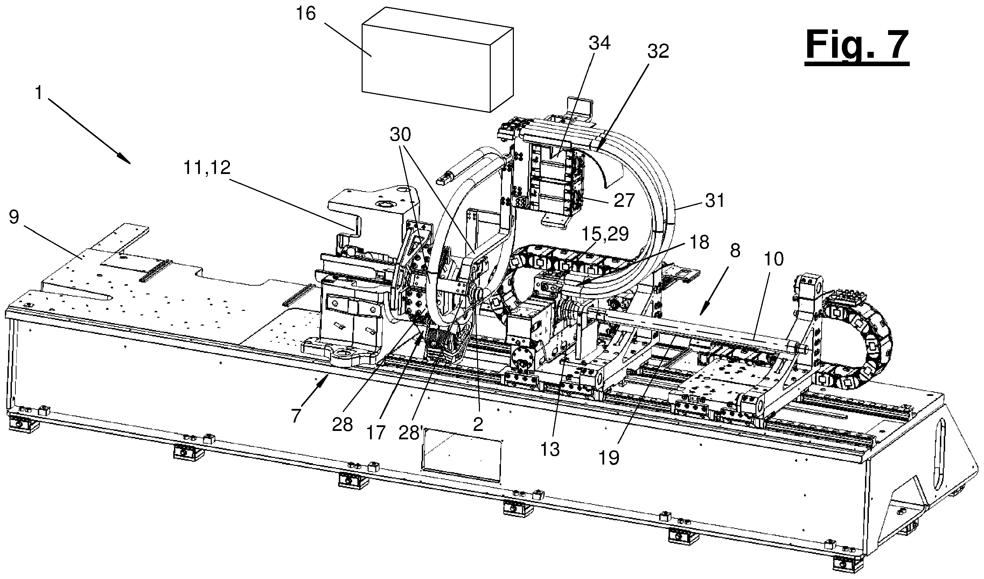

Die Stromquelle (16) kann einen oder mehrere steuerbare oder regelbare elektrische Umrichter (26) aufweisen, die z.B. einen bevorzugt konstanten Wechselstrom mit einer Frequenz von z.B. 1.000 Hz abgeben. Die Stromquelle (16) kann ferner einen oder mehrere elektrische Transformatoren (27) nebst z.B. integrierten Gleichrichtern aufweisen, die ggf. näher an den Werkstücken (2,3) angeordnet werden können. Figur 1 und 7 zeigen diese Anordnung.

Die Reibstromfügevorrichtung (1) kann eine Erfassungseinrichtung (25) für die Detektion physikalischer Parameter im Fügeprozess an ein oder mehreren Werkstücken (2,3) oder an anderer Stelle aufweisen. Die Erfassungseinrichtung (25) kann ein oder mehrere Sensoren für ein oder mehrere physikalische Parameter beinhalten. In der gezeigten Ausführungsform detektiert die Erfassungseinrichtung (25) die Temperatur z.B. direkt an einem oder beiden Werkstücken (2,3) im Fügeprozess.

Alternativ oder zusätzlich können Spannung U und Stromstärke I im Prozess erfasst und hieraus der elektrische Widerstand R als Prozessgröße abgeleitet werden. Der Widerstand R kann auch auf andere Weise detektiert werden. Der elektrische Widerstand R lässt einen direkten Rückschluss auf die mittlere Temperatur oder die eingeprägte Wärmemenge zu. Dies kann zum inprozess-Monitoring benutzt werden. Andererseits kann beim Anreiben mit einer geringen Stromdichte der Widerstand R getriggert werden, um die Dauer bzw. das Ende des Anreibens automatisch steuern.

Bei metallischen Werkstücken hängt das Umwandlungs- und Phasenverhalten des Werkstoffs und die Gefügeausbildung von der Höhe und ggf. von der Änderung der Temperatur, insbesondere von der Abkühlgeschwindigkeit, ab. Die durch die konduktive Wärme bewirkte Aufheizung und insbesondere Abkühlung der zu fügenden Werkstoffe und die gewünschte Phasen- und Gefügeausbildung werden über die detektierte Temperatur und deren größenmäßige und zeitliche Änderung zielgenau gesteuert und bedarfsweise geregelt. Die Sensorik zur Temperaturerfassung kann in beliebig geeigneter Weise ausgebildet sein, z.B. als Infrarotfühler, Wärmebildkamera oder dergleichen.

Die lediglich schematisch dargestellte Erfassungseinrichtung (25) kann ein oder mehrere weitere Sensoren aufweisen. Dies können z.B. Wegmesser sein, um eine Werkstückverkürzung beim Reibstromfügen, einen Weg des Gegenhalters (13) oder dgl. zu erfassen. Andere Sensoren können z.B. Oberflächeneigenschaften der zu fügenden Werkstücke (2,3), die Lage und Größe eines Erwärmungsbereichs (22) an den Werkstücken (2,3), einen Druck an den Fügeflächen (4,5), eine Werkstückverformung, insbesondere die Bildung eines Wulstes (23) an der Fügezone (21), oder dgl. detektieren.

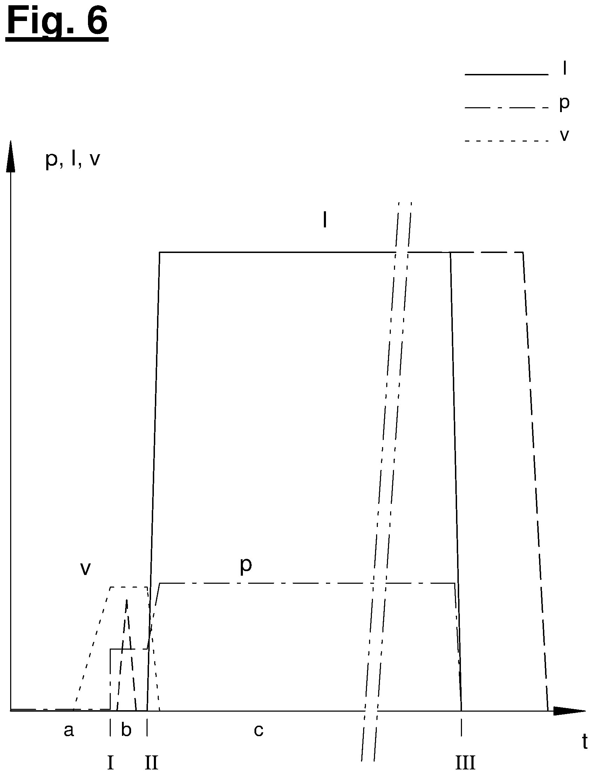

Figur 2 bis 5 verdeutlichen einen beispielhaften Ablauf des Reibstromfügeprozesses in mehreren Schritten. In Figur 6 sind in einem verkürzten Diagramm die im Reibstromfügeprozess auftretenden Verläufe des Anpressdrucks (p), des elektrischen Stroms (I) und der Geschwindigkeit (v) der Relativbewegung, insbesondere die Drehgeschwindigkeit bzw. Drehzahl der rotierenden Werkstückaufnahme (14), über der Zeit (t) angegeben. Ferner sind eine Annäherungsphase (a), eine Anreibphase (b) und eine Stauchphase (c) gezeigt. Die Phasenübergänge sind mit I und II und das Ende der Stauchphase (c) mit III gekennzeichnet.

Die gezeigten Graphen für (p), (I) und (v) können variieren. Insbesondere die Höhe und der Verlauf des Stroms (I) können zur gezielten Steuerung und ggf. Regelung der Temperatur und der Gefügeausbildung an den Werkstücken (2,3) verändert werden. Dies kann z.B. mittels eines Stromprogramms erfolgen.

Figur 2 zeigt die Ausgangsstellung oder Ladestellung, in der die Werkstücke (2,3) in ihre jeweilige Werkstückaufnahme (14,15) eingebracht sind und in Richtung der Achse (10) voneinander distanziert sind. Anschließend werden die Werkstücke (2,3) an ihren stirnseitigen Fügeflächen (4,5) in Berührungskontakt gebracht. Das Werkstück (3) wird dabei von der Staucheinrichtung (8) längs der Achse (10) vorgeschoben und bei Werkstückkontakt mit einer Anpresskraft (F) beaufschlagt. In Figur 2 ist die sog. Annäherungsphase (a) dargestellt. Davor kann eine eingangs genannte Kalibrierphase erfolgen. Bei der Vorschubbewegung erfolgt eine Wegmessung. Der Reibstromfügeprozess kann mit einer Wegsteuerung oder Wegregelung des Vorschubs und mit einer darauf basierenden Längenregelung der Werkstückverkürzung betrieben werden.

In dieser Kontaktstellung wird die durch einen Pfeil symbolisierte rotierende reibende Relativbewegung gestartet. Figur 3 zeigt diese Anreibphase (b) und ihren Beginn I.

Das Werkstück (2) wird vom Spindelantrieb (12) um die Achse (10) relativ zum stationären bzw. stehenden Werkstück (3) gedreht. Hierbei wirkt ein gemäß Figur 6 anfänglich niedriger axialer Anpressdruck (p). Die Rotationsbewegung kann bei bestehendem Kontakt der Werkstücke (2,3) oder bereits zuvor gestartet werden.

Figur 6 zeigt den vorherigen Start.

In der Anreibphase (b) ist die Stromquelle (16) z.B. abgeschaltet. Beim Anreiben werden die stirnseitigen Fügeflächen (4,5) im Reibkontakt egalisiert, wobei Unebenheiten abgetragen und die Fügeflächen (4,5) eingeebnet sowie gegenseitig angepasst werden.

Die Dauer der Anreibphase (b) ist sehr kurz. Sie beträgt z.B. 1 Sek. oder weniger. In der Anreibphase (b) wird in der Fügezone (21), an der die Fügeflächen (4,5) einander kontaktieren, wenig Wärme erzeugt. Der gestrichelt dargestellte Erwärmungsbereich (22) ist in Axialrichtung gesehen klein.

Figur 6 verdeutlicht eine Variante in der Anreibphase (b), in der die Stromquelle (16) angeschaltet ist und einen oder mehrere kurzzeitige Strompulse abgibt. Ein solcher Strompuls ist in Figur 6 gestrichelt dargestellt.

Figur 4 und 5 verdeutlichen die direkt anschließende Stauchphase (c). Am Ende der Anreibphase (b) wird gemäß Figur 4 die Relativbewegung der Werkstücke (2,3) beendet. Dies wird durch den gestrichelten Bewegungspfeil symbolisiert. Die Werkstücke (2,3) bleiben z.B. gemäß Figur 5 im weiteren Verlauf der Stauchphase (c) in ihrer am Ende der Anreibphase (b) eingenommenen Relativstellung. In dieser fixierten Relativstellung können die Werkstücke (2,3) in einer definierten Drehstellung zueinander positioniert sein.

Während der Bremsphase oder ab bzw. nach Stillstand der nach wie vor kontaktierenden Werkstücke (2,3) werden die Anpresskraft (F) und der an den Fügeflächen (4,5) wirkende Anpressdruck gleich gelassen oder erhöht. Figur 6 zeigt dieses Verhalten an der Stelle bzw. zum Zeitpunkt II.

In der Anreibphase (b) war der in Figur 6 gezeigte Anpressdruck (p) niedrig und lag z.B. bei ca. 25 MPa. In der Stauchphase (c) wird der Anpressdruck (p) im wesentlichen auf diesem Wert belassen. Er kann alternativ auf die erwähnten 125 MPa oder bevorzugt 100 MPa oder auch weniger erhöht werden.

Der Anpressdruck (p) kann während der Stauchphase (c) konstant gehalten werden. Er kann alternativ variieren, z.B. rampenartig oder stufenartig ansteigen oder abfallen oder auch um einen konstanten oder veränderlichen Mittelwert schwellen. Die Stauchphase (c) dauert länger als die Anreibphase (b). Die Dauer kann z.B. 1-4 Sekunden betragen.

Figur 5 zeigt das Endstadium der Stauchphase (c), in der die Werkstücke (2,3) gefügt sind und ein verbundenes Fügeteil (6) bilden, welches an der Fügezone (21) ggf. eine ringartigen Wulst (23) haben kann. Figur 4 und 5 verdeutlichen außerdem das axiale Anwachsen und Verbreitern des Erwärmungsbereichs (22) bei der konduktiven Erwärmung.

Zu Beginn II der Stauchphase (c) wird der in Figur 6 mit durchgezogenen Strichen dargestellte elektrische Strom (I) z.B. eingeschaltet und bewirkt die konduktive Erwärmung. In der Variante mit einem vorhergehenden Strompulsen in der Anreibphase (b) kann er auch bei Beginn II der Stauchphase (c) signifikant erhöht werden.

Das Einschalten des Stroms (I) kann z.B. in der Bremsphase der Relativbewegung bei sinkender Geschwindigkeit (v) oder bei Stillstand der kontaktierenden Werkstücke (2,3) erfolgen. Der elektrische Strom (I) kann sofort bei Stillstand oder ggf. auch mit einer einstellbaren zeitlichen Verzögerung eingeschaltet werden.

Der elektrische Strom (I) bleibt während der Stauchphase (c) eingeschaltet. Er kann während der Stauchphase (c) gemäß Figur 6 konstant sein. Er kann alternativ variieren. Die Variationen können rampenartig oder stufenartig, steigend oder abfallend oder auch um einen konstanten oder veränderlichen Mittelwert schwellend sein. Eventuelle Variationen im Verlauf des Anpressdrucks (p) und des Stroms (I) können aneinander angepasst werden.

Die Variationen im Verlauf des Stroms (I) und ggf. des Anpressdrucks (p) können von der Steuerung in Abhängigkeit von den Signalen bzw. Detektionswerten der Erfassungseinrichtung (25) gesteuert und ggf. geregelt werden. Hierdurch kann z.B. die konduktive Erwärmung an das Umwandlungs- und Phasenverhalten von Werkstoffen, insbesondere Metallen, angepasst werden, um z.B. eine gewünschte Gefügeausbildung zu erreichen.

Das plastifizierende Erwärmen und Fügen der Werkstücke (2,3) unter Anpressdruck wird vollständig oder zum überwiegenden Anteil durch die konduktive elektrische Erwärmung in der Stauchphase (c) bewirkt.

Am Ende III der Stauchphase (c) werden die Staucheinrichtung (8) und die Stromquelle (16) abgeschaltet. Der Strom (I) kann gleichzeitig mit dem Anpressdruck (p) oder kurz zuvor abgeschaltet werden. Der Strom (I) bleibt zumindest über den größten Teil der Dauer der Stauchphase (c) eingeschaltet. Die Dauer der Stauchphase (c) wird durch die Dauer des Anpressdrucks (p) bestimmt.

Die in der Stauchphase (c) gemäß Figur 5 gefügten Werkstücke (2,3) bzw. das Fügeteil (6) können nach Öffnen der Werkstückaufnahmen (14,15) entnommen werden. Die Werkstückaufnahme (14) kann dann in die in Figur 2 verdeutlichte Ausgangs- oder Ladestellung für die erneute Beladung zurückbewegt werden.

Der vorbeschriebene Reibstromfügeprozess kann am Ende und/oder am Beginn erweitert werden. Am Beginn kann ein elektrisches Vorwärmen der noch ungefügten Werkstücke (2,3) vorgeschaltet werden. Dies kann konduktiv oder induktiv erfolgen.

Am Ende kann ein elektrischer Nachwärmeprozess nachgeschaltet werden. Dieser kann ebenfalls konduktiv oder induktiv erfolgen. Im Diagramm von Figur 6 ist hierfür eine verlängerte Einschaltdauer des Stroms (I) gestrichelt dargestellt.

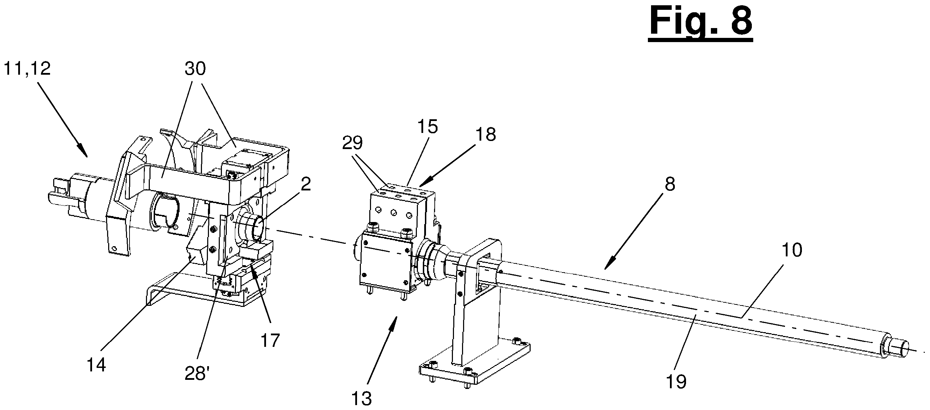

Figur 7 zeigt ein konstruktives Ausführungsbeispiel zu der Reibstromfügevorrichtung (1) von Figur 1. Die Reibstromfügevorrichtung (1) weist eine Reibeinrichtung (7), eine Staucheinrichtung (8), ein Maschinengestell (9) und eine steuerbare und ggf. regelbare Stromquelle (16) nebst Stromanschlüssen (17,18) und einer Stromzuführung für die Beaufschlagung der in Werkstückaufnahmen (14,15) gehaltenen Werkstücke (2,3) mit dem elektrischen Strom zum konduktiven Erwärmen der Werkstücke (2,3). In Figur 8 sind die Stromanschlüsse (17,18) und die Stromzuführung isoliert dargestellt.

Figur 7 zeigt außerdem eine Entmagnetisierungseinrichtung (32), mit der die strombeaufschlagten Komponenten der Reibstromfügevorrichtung (1) und ggf. die Werkstücke (2,3), insbesondere das Fügeteil (6), entmagnetisiert werden können.

In Figur 7 ist die Stromquelle (16) schematisch gezeigt. Der oder die Umrichter (26) der Schweißstromquelle (16) sind nicht dargestellt. Figur 7 zeigt die Anordnung eines Transformators (27), der über Leitungen (30,31) mit den Anschlussstellen (17,18) verbunden ist. Der Transformator (27) ist in der Nähe und z.B. oberhalb der Werkstücke (2,3) angeordnet. Er kann mit einer z.B. schlittenartigen Stellvorrichtung verbunden und bedarfsweise entfernt werden.

Der Transformator (27) ist mit den Stromanschlüssen (17,18) über die erwähnten Leitungen (30,31) verbunden. Die Leitungen (30,31) können starr oder flexibel ausgebildet sein. Die Leitung (31) vom Transformator (27) zum Stromanschluss (18) ist z.B. beweglich und kann der Axial- und Stauchbewegung des Gegenhalters (13) und seiner Werkstückaufnahme (15) entlang der Prozessachse oder Maschinenachse (10) folgen. Diese Leitung (31) ist z.B. als ein Bündel von mehreren flexiblen in einem Bogen verlegten und in einem Kühlmantel eingeschlossenen Stromkabeln ausgebildet. Die vom Transformator (27) zum Stromanschluss (17) führende Leitung (30) kann starr und z.B. in Form von Stromschienen ausgebildet sein. Sie kann alternativ oder zusätzlich flexibel und in Form von Stromkabeln der vorerwähnten Art ausgebildet sein.

In Figur 7 sind zwei Varianten von Elektroden (28,28') am Stromanschluss (17) und an der dem Maschinenkopf (11) zugeordneten und bewegten Werkstückaufnahme (14) in einer Zeichnung dargestellt. In der Praxis wird üblicherweise nur eine Variante benutzt. Figur 8 zeigt eine der Varianten in isolierter Darstellung.

Figur 7 zeigt einerseits eine Ausbildung der ein oder mehreren Elektroden (28) als Schleifringübertrager oder Bürstenübertrager. Die Elektroden (28) können bedarfsweise den Strom an die in Rotation befindliche Werkstückaufnahme (14) übertragen. Die bevorzugt mehreren Elektroden (28) sind außenseitig am zylindrischen Umfang der Werkstückaufnahme (14) verteilt angeordnet und kontaktieren deren Mantel. Innerhalb der Werkstückaufnahme (14) können flexible Leitungsstücke vorhanden sein, die eine Verbindung zu den z.B. radial beweglichen Spannbacken herstellen. Die Elektroden (28) können zum Anstellen an die Werkstückaufnahme (14) beweglich sein.

Figur 7 und 8 zeigen außerdem eine Elektrodenvariante mit ein oder mehreren, bevorzugt zwei, Elektroden (28'), die direkt an das in der Werkzeugaufnahme (14) gehaltene Werkstück (2) bevorzugt bei dessen Stillstand zugestellt und in stromleitenden Kontakt gebracht werden können. Diese backenförmigen Elektroden (28') sind vor der Werkzeugaufnahme (14) angeordnet. Sie sind über flexible Leitungen (30) mit dem Transformator (27) verbunden.

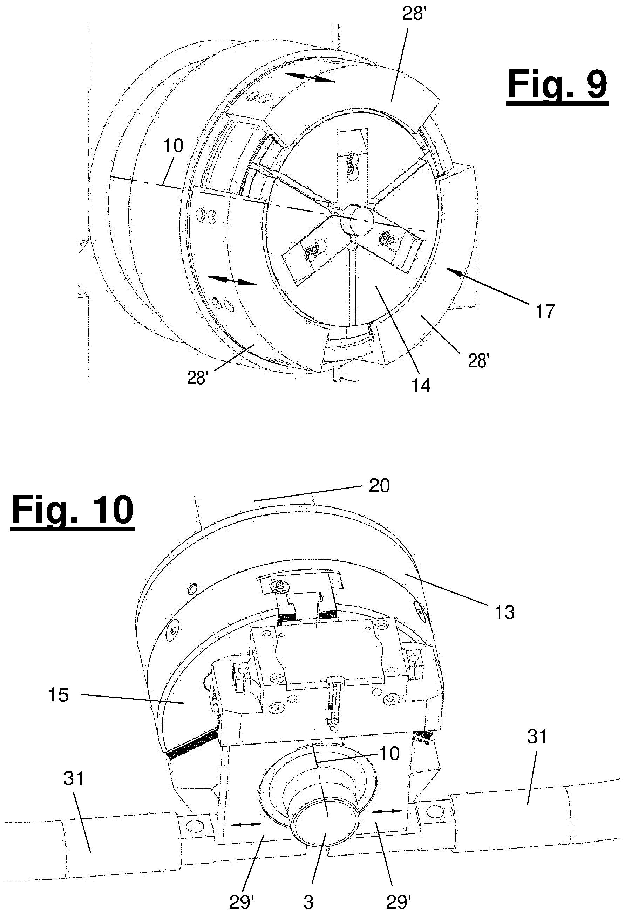

Figur 9 zeigt eine weitere mögliche Elektrodenvariante. Die Elektroden (28') sind in diesem Fall als axial bewegliche Backen ausgebildet, die über eine nicht dargestellte Stellvorrichtung in Richtung der Prozessachse (10) axial an die Werkstückaufnahme (14) angelegt und in stromleitenden Kontakt gebracht werden können. Das Anlegen kann z.B. axial von vorn oder alternativ von vorn und hinten bei einer anschwimmenden Zustellung erfolgen.

Die Elektroden bzw. Backen (28') sind z.B. als gekantete Ringabschnitte gestaltet und können mit dem äußeren stirnseitigen Rand und dem benachbarten Umfangsbereich der Werkstückaufnahme (14) in Kontakt gebracht werden. Diese Elektrodenform eignet sich besonders für eine Strombeaufschlagung bei Stillstand der Werkstückaufnahme (14) und des Werkstücks (2).

Figur 7 und 8 zeigen einen Stromanschluss (18) an der Werkstückaufnahme (15) des Gegenhalters (13). Die Werkstückaufnahme (15) umfasst z.B. mehrere, insbesondere zwei, bewegliche und an das Werkstück (3) zustellbare Spannbacken, welche Elektroden (29) bilden und mit der flexiblen Leitung (31) verbunden sind.

Figur 10 zeigt hierzu eine Variante, bei der der Stromanschluss (18) am Werkstück (3) angeordnet ist, welches von der Werkstückaufnahme (15) am Gegenhalter (13) gehalten wird. Hierfür sind ein oder mehrere, insbesondere zwei, backenförmige Elektroden (29') vorgesehen, die mit einem eigenen Stellantrieb an das Werkstück (3) zugestellt und in stromleitenden Kontakt gebracht werden können. Die Elektroden (29') sind über bevorzugt flexible Leitungen (31) mit dem Transformator (27) verbunden.

Die Entmagnetisierungseinrichtung (32) kann in unterschiedlicher Weise ausgebildet sein. Bei einer elektrischen konduktiven Beheizung der kontaktierten Werkstücke (2,3) mittels Gleichstrom empfiehlt sich eine elektrische Ausbildung der Entmagnetisierungsvorrichtung (32), die einen Entmagnetisierungsstrom mit umgekehrter Polung erzeugt. Die Stromstärke des Entmagnetisierungsstroms reicht aus, um die erforderliche Koerzitivfeldstärke zum Entmagnetisieren der beaufschlagten Teile zu erreichen. Der Entmagnetisierungsstrom kann in Form von ein oder mehreren Strompulsen abgegeben werden. Das Entmagnetisieren kann während der Stauchphase (c), insbesondere an deren Ende, stattfinden.

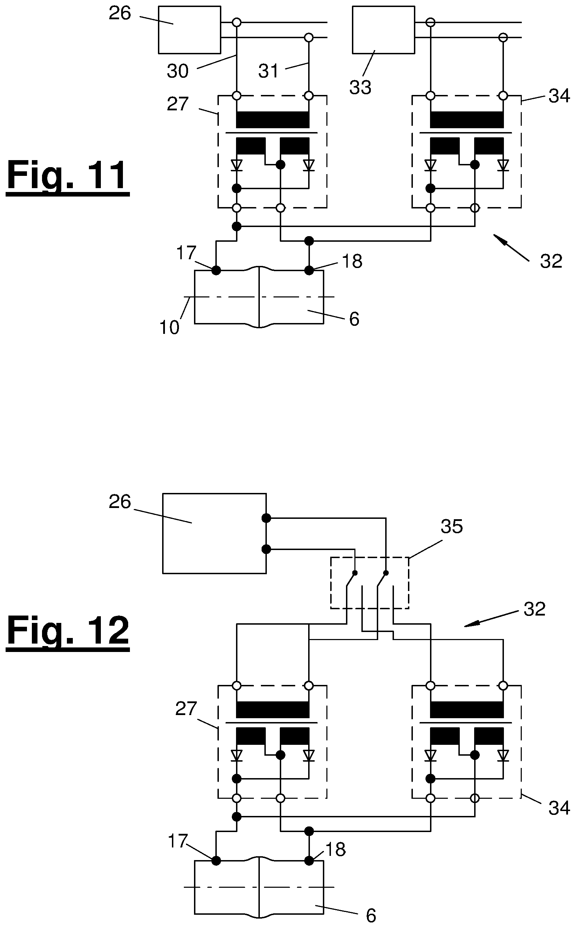

Figur 11 und 12 zeigen beispielhafte Schaltbilder für eine solche elektrische Entmagnetisierungseinrichtung (32).

In der Variante von Figur 11 weist die Entmagnetisierungsvorrichtung (32) einen eigenen Umrichter (33) und einen eigenen Transformator (34) auf, die über Leitungen mit den Stromanschlüssen (17,18) verbunden sind und einen Gleichstrom abgeben. Dessen Polung ist umgekehrt gegenüber der Polung des konduktiven Heizstroms, welcher mittels des Umrichters (26) und des zugeordneten Transformators (27) erzeugt wird. Die Stromanschlüsse (17,18) können sich an den Werkstücken bzw. am Fügeteil (6) und/oder an den Werkstückaufnahmen (14,15) befinden. Der Umrichter (33) kann an das elektrische Netz angeschlossen sein. Er kann eigenständig gesteuert oder geregelt werden. Eine Regelung ist z.B. mittels einer nicht dargestellten Detektionseinrichtung möglich, welche den Magnetisierungsgrad der betroffenen Komponenten der Reibstromfügevorrichtung (1) und ggf. der Werkstücke (2,3) bzw. des Fügeteils (6) erfasst.

Figur 12 zeigt eine andere Ausführungsform, die mit nur einem Umrichter (26) auskommt, wobei die Entmagnetisierungsvorrichtung (32) einen eigenen Transformator (34) und einen z.B. primärseitigen Umschalter (35) aufweist. Über den Umschalter (35) wird der Umrichter (26) für das elektrische konduktive Heizen mit dem Transformator (27) und mit den Stromanschlüssen (17,18) verbunden. Für die Entmagnetisierung schaltet der Umschalter (35) um und stellt eine elektrische Verbindung des Umrichters (26) mit dem anderen Transformator (34) und den Stromanschlüssen (17,18) mit umgesetzter Polung her.

In einer nicht dargestellten Variante kann der Umschalter (35) sekundärseitig angeordnet sein. In diesem Fall genügen der zum elektrischen konduktiven Heizen vorgesehene Umrichter (26) und Transformator (27), wobei der sekundärseitige Umschalter zwischen dem Transformator (27) und den Stromanschlüssen (17,18) angeordnet ist. Für das Entmagnetisieren schaltet er die Polung des auf das Fügeteil (6) übertragenen Gleichstroms um.

Figur 11 und 12 verdeutlichen außerdem in einer Schemadarstellung die beispielhafte Ausbildung von Transformatoren (27,34) mit einem integrierten Gleichrichter. Der oder die Gleichrichter können alternativ anders ausgebildet und angeordnet sein.

In einer weiteren und nicht dargestellten Ausführungsvariante kann das Entmagnetisieren durch mechanische Bewegung, insbesondere Erschütterung, durch eine Wärmebehandlung oder auch durch Wechselstrom oder auch durch Kombination verschiedener Vorgehensweisen erfolgen. Daneben sind weitere Möglichkeiten gegeben, zum Beispiel das temporäre Anlegen eines Dauermagnetfelds oder dergleichen.

Abwandlungen der gezeigten und beschriebenen Ausführungsbeispiele sind im Rahmen der Ansprüche in verschiedener Weise möglich. Die Merkmale der verschiedenen Ausführungsbeispiele und der genannten Varianten können miteinander kombiniert, insbesondere auch vertauscht werden.

### BEZUGSZEICHENLISTE

- 1: Reibstromfügevorrichtung
- 2: Werkstück
- 3: Werkstück
- 4: Fügefläche, Stirnseite
- 5: Fügefläche, Stirnseite
- 6: Fügeteil, gefügtes Teil, Fertigteil
- 7: Reibeinrichtung
- 8: Staucheinrichtung
- 9: Maschinengestell
- 10: Prozessachse, Maschinenachse
- 11: Maschinenkopf
- 12: Antrieb, Spindeltrieb
- 13: Gegenhalter
- 14: Werkstückaufnahme, Spannfutter
- 15: Werkstückaufnahme, Spannfutter
- 16: Stromquelle
- 17: Stromanschluss
- 18: Stromanschluss
- 19: Stauchantrieb, Zylinder
- 20: Abtriebselement, Kolbenstange
- 21: Fügezone
- 22: Erwärmungsbereich
- 23: Wulst
- 24: Steuerung
- 25: Erfassungseinrichtung
- 26: Umrichter
- 27: Transformator
- 28: Elektrode, Schleifring
- 28': Elektrode, Backe
- 29: Elektrode
- 29': Elektrode, Backe
- 30: Leitung
- 31: Leitung
- 32: Entmagnetisierungseinrichtung
- 33: Umrichter
- 34: Transformator
- 35: Umschalter

- p: Anpressdruck
- v: Geschwindigkeit
- I: Strom elektrisch

- a: Annäherungsphase
- b: Anreibphase
- c: Stauchphase

## Patentansprüche

1. Verfahren zum Reibstromfügen von zwei oder mehr Werkstücken (2,3) durch Reiben und durch konduktive Erwärmung mit elektrischem Strom (I), insbesondere Gleichstrom, mit folgenden Prozessschritten:
- die Werkstücke (2,3) werden zunächst in einer Annäherungsphase (a) entlang einer gemeinsamen Prozessachse (10) bewegt und mit ihren einander zugewandten sowie quer zur Prozessachse (10) ausgerichteten Fügeflächen (4,5) in Kontakt gebracht und
- werden vor oder beginnend mit der Kontaktierung quer zur Prozessachse (10) oder um die Prozessachse (10) relativ zueinander bewegt, insbesondere gedreht, wobei
- in einer mit der Kontaktierung beginnenden Anreibphase (b) die Werkstücke (2,3) unter einem Anpressdruck (p) durch die gegenseitige Relativbewegung an ihren Fügeflächen (4,5) aneinander gerieben und nur egalisiert werden,
- wobei am Ende der Anreibphase (b) die reibende Relativbewegung der Werkstücke (2,3) dauerhaft beendet wird und
- die Werkstücke (2,3) in einer an die Anreibphase (b) direkt anschließenden Stauchphase (c) an ihren kontaktierenden Fügeflächen (4,5) unter einem Anpressdruck (p) entlang der Prozessachse (10) und unter sofortiger sowie andauernder konduktiver Erwärmung mit elektrischem Strom (I) zusammengepresst, plastifiziert und gefügt werden, wobei die Temperatur der Werkstücke (2,3) im Fügeprozess erfasst wird und der Fügeprozess, insbesondere die konduktive Erwärmung mit elektrischem Strom (I), nach den Erfassungsdaten gesteuert oder geregelt wird.

2. Verfahren nach Anspruch 1, **dadurch gekennzeichnet, dass** das plastifizierende Erwärmen und Fügen der Werkstücke (2,3) unter Anpressdruck vollständig oder zum überwiegenden Anteil durch die konduktive elektrische Erwärmung in der Stauchphase (c) bewirkt wird.

3. Verfahren nach Anspruch 1 oder 2, **dadurch gekennzeichnet, dass** die Werkstücke (2,3) in der Anreibphase (b) nicht oder nur kurzfristig und pulsweise mit elektrischem Strom (I) beaufschlagt werden.

4. Verfahren nach Anspruch 3, **dadurch gekennzeichnet, dass** die Werkstücke (2,3) in der Anreibphase (b) mit einer niedrigen elektrischen Stromdichte und in der Stauchphase (c) mit einer wesentlich erhöhten elektrischen Stromdichte beaufschlagt werden.

5. Verfahren nach einem der vorhergehenden Ansprüche, **dadurch gekennzeichnet, dass** die Werkstücke (2,3) mit geregeltem konstantem Gleichstrom beaufschlagt werden.

6. Verfahren nach einem der vorhergehenden Ansprüche, **dadurch gekennzeichnet, dass** die Werkstücke (2,3) in der Stauchphase (c) mit einer Stromdichte von 30 - 50 A/mm² beaufschlagt werden.

7. Verfahren nach einem der vorhergehenden Ansprüche, **dadurch gekennzeichnet, dass** die Werkstücke (2,3) erst am Ende oder bevorzugt nach Beendigung der Anreibphase (b) und der reibenden Relativbewegung mit dem elektrischen Strom (I) beaufschlagt werden.

8. Verfahren nach einem der vorhergehenden Ansprüche, **dadurch gekennzeichnet, dass** die Werkstücke (2,3) in der Anreibphase (b) und in der Stauchphase (c) an den Fügeflächen (4,5) mit einem im Wesentlichen gleichen Anpressdruck (p) beaufschlagt werden.

9. Verfahren nach einem der vorhergehenden Ansprüche, **dadurch gekennzeichnet, dass** die Werkstücke (2,3) mit einem Anpressdruck (p) von 125 MPa oder weniger, insbesondere 100 MPa oder weniger, zusammengepresst werden.

10. Verfahren nach einem der vorhergehenden Ansprüche, **dadurch gekennzeichnet, dass** die Reibstromfügevorrichtung (1) und ggf. die Werkstücke (2,3) entmagnetisiert werden, vorzugsweise am Ende der Stauchphase (c).

11. Vorrichtung zum Reibstromfügen und zur Durchführung des Verfahrens nach einem der Ansprüche 1 bis 10, wobei die Reibstromfügevorrichtung (1) eine Reibeinrichtung (7), eine Staucheinrichtung (8), eine elektrische Stromquelle (16) und eine programmierbare Steuerung (24) sowie Werkstückaufnahmen (14,15) für die zu fügenden Werkstücke (2,3) aufweist, wobei die Reibstromfügevorrichtung (1) derart gesteuert ist, dass die Werkstücke (2,3) zunächst in einer Annäherungsphase (a) mit ihren einander zugewandten und quer zu einer gemeinsamen Prozessachse (10) ausgerichteten Fügeflächen (4,5) entlang der Prozessachse (10) bewegt und in Kontakt gebracht und
- dann in einer Anreibphase (b) unter einem Anpressdruck (p) durch gegenseitige Relativbewegung an ihren Fügeflächen (4,5) aneinander gerieben und nur egalisiert werden,
- wobei am Ende der Anreibphase (b) die reibende Relativbewegung dauerhaft beendet wird und
- die Werkstücke (2,3) in einer an die Anreibphase (b) anschließenden Stauchphase (c) an ihren kontaktierenden Fügeflächen (4,5) unter einem Anpressdruck (p) entlang der Prozessachse (10) und unter konduktiver Erwärmung mit elektrischem Strom (I) zusammengepresst, plastifiziert und gefügt werden, wobei die Reibstromfügevorrichtung (1) eine Erfassungseinrichtung (25) für die Detektion der Temperatur der Werkstücke (2,3) im Fügeprozess aufweist und der Fügeprozess, insbesondere die konduktive Erwärmung mit elektrischem Strom (I), nach den Erfassungsdaten gesteuert oder geregelt wird.

12. Vorrichtung nach Anspruch 11, **dadurch gekennzeichnet, dass** die elektrische Stromquelle (16) programmierbar sowie steuer- und ggf. regelbar ausgebildet und mit den Werkstücken (2,3) über Stromanschlüsse (17,18) elektrisch leitend verbunden ist.

13. Vorrichtung nach Anspruch 11 oder 12, **dadurch gekennzeichnet, dass** die elektrische Stromquelle (16) als Gleichstrom-Stromquelle mit einer Konstantstrom-Regelung zur exakten Einhaltung der programmgesteuerten elektrischen Prozessströme ausgebildet ist.

14. Vorrichtung nach einem der Ansprüche 11 bis 13, **dadurch gekennzeichnet, dass** die Reibstromfügevorrichtung (1) eine bevorzugt elektrische Entmagnetisierungseinrichtung (32) aufweist.

15. Vorrichtung nach einem der Ansprüche 11 bis 14, **dadurch gekennzeichnet, dass** die Staucheinrichtung (8) dazu ausgebildet die zu fügenden Werkstücke (2,3) entlang der Prozessachse (10) aus einer anfänglich distanzierten Ladeposition an ihren Fügeflächen (4,5) in gegenseitigen Kontakt zu bringen und eine steuerbare und bevorzugt regelbare Anpresskraft (F) zu erzeugen und wobei die Reibeinrichtung (7) dazu ausgebildet ist, die in Kontakt befindlichen Werkstücke (2,3) relativ zueinander zu bewegen, insbesondere um die Prozessachse (10) zu drehen.

## Claims

1. Method for friction current joining two or more workpieces (2, 3) by rubbing and by conductive heating with electric current (I), in particular direct current, comprising the following process steps:
- in an approach phase (a), the workpieces (2, 3) are first moved along a common process axis (10) and brought into contact by way of their mutually facing joining surfaces (4, 5) oriented transversely to the process axis (10) and
- are moved, in particular rotated, relative to each other transversely to the process axis (10) or about the process axis (10) before or starting with when contact is made, wherein
- in a rubbing phase (b) starting with when contact is made, the workpieces (2, 3) are rubbed against each other and only levelled under a contact pressure (p) by the mutual relative movement at their joining surfaces (4, 5),
- wherein, at the end of the rubbing phase (b), the rubbing relative movement of the workpieces (2, 3) is permanently ended and
- the workpieces (2, 3) are compressed, plasticized and joined in a compression phase (c) directly following the rubbing phase (b) at their contacting joining surfaces (4, 5) under a contact pressure (p) along the process axis (10) and compressed under immediate and continuous conductive heating with electric current (I), wherein the temperature of the workpieces (2, 3) in the joining process is recorded and the joining process, in particular the conductive heating with electric current (I), is controlled or regulated in accordance with the recorded data.

2. Method according to Claim 1, **characterized in that** the plasticizing heating and joining of the workpieces (2, 3) under contact pressure is effected completely or predominantly by the conductive electrical heating in the compression phase (c).

3. Method according to Claim 1 or 2, **characterized in that** electric current (I) is not applied or is applied only briefly and in a pulsed manner to the workpieces (2, 3) in the rubbing phase (b).

4. Method according to Claim 3, **characterized in that** a low electric current density is applied to the workpieces (2, 3) in the rubbing phase (b) and a significantly increased electric current density is applied to the said workpieces in the compression phase (c) .

5. Method according to any of the preceding claims, **characterized in that** regulated constant direct current is applied to the workpieces (2, 3).

6. Method according to any of the preceding claims, **characterized in that** a current density of 30-50 A/mm² is applied to the workpieces (2, 3) in the compression phase (c).

7. Method according to any of the preceding claims, **characterized in that** the electric current (I) is applied to the workpieces (2, 3) only at the end or preferably after conclusion of the rubbing phase (b) and the rubbing relative movement.

8. Method according to any of the preceding claims, **characterized in that** a substantially identical contact pressure (p) is applied to the workpieces (2, 3) at the joining surfaces (4, 5) in the rubbing phase (b) and in the compression phase (c).

9. Method according to any of the preceding claims, **characterized in that** the workpieces (2, 3) are pressed together with a contact pressure (p) of 125 MPa or less, in particular 100 MPa or less.

10. Method according to any of the preceding claims, **characterized in that** the friction current joining apparatus (1) and possibly the workpieces (2, 3) are demagnetized, preferably at the end of the compression phase (c).

11. Apparatus for friction current joining and for carrying out the method according to any of Claims 1 to 10, wherein the friction current joining apparatus (1) has a friction device (7), a compression device (8), an electric current source (16) and a programmable controller (24) and workpiece holders (14, 15) for the workpieces (2, 3) to be joined, wherein the friction current joining apparatus (1) is controlled in such a way that the workpieces (2, 3), by way of their mutually facing joining surfaces (4, 5) oriented transversely to a common process axis (10), are first moved and brought into contact along the process axis (10) in an approach phase (a) and
- then, in a rubbing phase (b), are rubbed against each other and only levelled under a contact pressure (p) by mutual relative movement at their joining surfaces (4, 5),
- wherein, at the end of the rubbing phase (b), the rubbing relative movement is permanently ended and
- the workpieces (2, 3) are compressed, plasticized and joined in a compression phase (c) following the rubbing phase (b) at their contacting joining surfaces (4, 5) under a contact pressure (p) along the process axis (10) and under conductive heating with electric current (I), wherein the friction current joining apparatus (1) has a recording device (25) for detecting the temperature of the workpieces (2, 3) in the joining process and the joining process, in particular the conductive heating with electric current (I), is controlled or regulated in accordance with the recorded data.

12. Apparatus according to Claim 11, **characterized in that** the electric current source (16) is programmable and also controllable and possibly regulatable and electrically conductively connected to the workpieces (2, 3) via current connections (17, 18).

13. Apparatus according to Claim 11 or 12, **characterized in that** the electric current source (16) is in the form of a direct current source with constant current control for exact compliance with the programme-controlled electric process currents.

14. Apparatus according to any of Claims 11 to 13, **characterized in that** the friction current joining apparatus (1) has a preferably electrical demagnetization device (32).

15. Apparatus according to any of Claims 11 to 14, **characterized in that** the compression device (8) is designed to bring the workpieces (2, 3) to be joined into mutual contact at their joining surfaces (4, 5) along the process axis (10) from an initially distanced loading position and to generate a controllable and preferably regulatable contact force (F), and wherein the friction device (7) is designed to move the workpieces (2, 3) that are in contact relative to each other, in particular to rotate the said workpieces about the process axis (10).

## Revendications

1. Procédé permettant l'assemblage par courant par friction de deux ou pièces (2, 3) ou plus par friction et par chauffage par conduction à l'aide d'un courant électrique (I), en particulier d'un courant continu, comprenant les étapes de processus suivantes consistant à :
- dans une phase d'approche (a), les pièces (2, 3) sont d'abord déplacées le long d'un axe de processus commun (10) et sont mises en contact avec leurs surfaces d'assemblage (4, 5) tournées l'une vers l'autre et alignées transversalement à l'axe de processus (10), et
- sont déplacées, en particulier pivotées, l'une par rapport à l'autre, avant ou en commençant à la mise en contact, transversalement à l'axe de processus (10) ou autour de l'axe de processus (10), dans lequel
- dans une phase de friction initiale (b) commençant par la mise en contact, les pièces (2, 3) sont frottées l'une contre l'autre et seulement égalisées sous une pression de contact (p) par le mouvement relatif mutuel au niveau de leurs surfaces d'assemblage (4, 5),
- dans lequel, à la fin de la phase de friction initiale (b), le mouvement relatif de friction des pièces (2, 3) est terminé définitivement, et
- dans une phase de refoulement (c) directement consécutive à la phase de friction initiale (b), les pièces (2, 3) sont comprimées, plastifiées et assemblées au niveau de leurs surfaces d'assemblage (4, 5) en contact sous une pression de contact (p) le long de l'axe de processus (10) et sous chauffage par conduction immédiat et continu à l'aide d'un courant électrique (I), dans lequel la température des pièces (2, 3) dans le processus d'assemblage est détectée, et le processus d'assemblage, en particulier le chauffage par conduction à l'aide d'un courant électrique (I), est commandé ou régulé selon les données de détection.

2. Procédé selon la revendication 1, **caractérisé en ce que** le chauffage de plastification et l'assemblage des pièces (2, 3) sont provoqués sous une pression de contact entièrement ou en majeure partie par le chauffage électrique par conduction dans la phase de refoulement (c).

3. Procédé selon la revendication 1 ou 2, **caractérisé en ce que** dans la phase de friction initiale (b), les pièces (2, 3) ne sont pas ou sont brièvement et par impulsion seulement sollicitées par le courant électrique (I).

4. Procédé selon la revendication 3, **caractérisé en ce que** dans la phase de friction initiale (b), les pièces (2, 3) sont sollicitées par une faible densité de courant électrique, et dans la phase de refoulement (c), elles sont sollicitées par une densité de courant électrique nettement plus élevée.

5. Procédé selon l'une quelconque des revendications précédentes, **caractérisé en ce que** les pièces (2, 3) sont sollicitées par un courant continu constant régulé.

6. Procédé selon l'une quelconque des revendications précédentes, **caractérisé en ce que** dans la phase de refoulement (c), les pièces (2, 3) sont sollicitées par une densité de courant de 30 à 50 A/mm².

7. Procédé selon l'une quelconque des revendications précédentes, **caractérisé en ce que** les pièces (2, 3) ne sont sollicitées par le courant électrique (I) qu'à la fin ou de préférence après l'achèvement de la phase de friction initiale (b) et du mouvement relatif de friction.

8. Procédé selon l'une quelconque des revendications précédentes, **caractérisé en ce que** dans la phase de friction initiale (b) et dans la phase de refoulement (c), les pièces (2, 3) sont sollicitées au niveau des surfaces d'assemblage (4, 5) par une pression de contact (p) substantiellement identique.

9. Procédé selon l'une quelconque des revendications précédentes, **caractérisé en ce que** les pièces (2, 3) sont comprimées à une pression de contact (p) de 125 MPa ou moins, en particulier de 100 MPa ou moins.

10. Procédé selon l'une quelconque des revendications précédentes, **caractérisé en ce que** le dispositif d'assemblage par courant par friction (1), et le cas échéant les pièces (2, 3), sont désaimantés, de préférence à la fin de la phase de refoulement (c).

11. Dispositif permettant un assemblage par courant par friction et l'exécution du procédé selon l'une quelconque des revendications 1 à 10, dans lequel le dispositif d'assemblage par courant par friction (1) présente un équipement de friction (7), un équipement de refoulement (8), une source de courant électrique (16) et un dispositif de commande programmable (24) ainsi que des logements de pièce (14, 15) pour les pièces (2, 3) à assembler, dans lequel le dispositif d'assemblage par courant par friction (1) est commandé de telle sorte que d'abord dans une phase d'approche (a), les pièces (2, 3) sont déplacées et mises en contact le long de l'axe de processus (10) avec leurs surfaces d'assemblage (4, 5) tournées l'une vers l'autre et alignées transversalement à un axe de processus commun (10), et
- ensuite, dans une phase de friction initiale (b), frottées l'une contre l'autre et seulement égalisées sous une pression de contact (p) par un mouvement relatif mutuel au niveau de leurs surfaces d'assemblage (4, 5),
- dans lequel, à la fin de la phase de friction initiale (b), le mouvement relatif de friction est terminé définitivement, et
- dans une phase de refoulement (c) directement consécutive à la phase de friction initiale (b), les pièces (2, 3) sont comprimées, plastifiées et assemblées au niveau de leurs surfaces d'assemblage (4, 5) en contact sous une pression de contact (p) le long de l'axe de processus (10) et sous chauffage par conduction à l'aide d'un courant électrique (I), dans lequel le dispositif d'assemblage par courant par friction (1) présente un équipement de détection (25) pour détecter la température des pièces (2, 3) dans le processus d'assemblage, et le processus d'assemblage, en particulier le chauffage par conduction à l'aide d'un courant électrique (I), est commandé ou régulé selon les données de détection.

12. Dispositif selon la revendication 11, **caractérisé en ce que** la source de courant électrique (16) est réalisée de manière à pouvoir être programmée ainsi que commandée ou le cas échéant régulée et est reliée de manière électriquement conductrice aux pièces (2, 3) par l'intermédiaire de connexions électriques (17, 18).

13. Dispositif selon la revendication 11 ou 12, **caractérisé en ce que** la source de courant électrique (16) est réalisée sous forme de source de courant continu avec une régulation de courant constant pour respecter exactement les courants de processus électriques commandés par programme.

14. Dispositif selon l'une quelconque des revendications 11 à 13, **caractérisé en ce que** le dispositif d'assemblage par courant par friction (1) présente un équipement de désaimantation (32) de préférence électrique.

15. Dispositif selon l'une quelconque des revendications 11 à 14, **caractérisé en ce que** l'équipement de refoulement (8) est réalisé pour mettre en contact mutuel les pièces (2, 3) à assembler le long de l'axe de processus (10) d'une position de charge initialement éloignée au niveau de leurs surfaces d'assemblage (4, 5) et pour générer une force de contact (F) pouvant être commandée et de préférence régulée, et dans lequel l'équipement de friction (7) est réalisé pour déplacer les pièces (2, 3) en contact relativement l'une par rapport à l'autre, en particulier autour de l'axe de processus (10).
